# EUROPEAN PATENT APPLICATION

(11) **EP 4 621 443 A1**
(43) Date of publication of application: **24.09.2025**
(21) Application number: 24189497.1
(22) Date of filing: 18.07.2024
(51) Int. Cl.: G01S 19/21, G01S 19/36, G01S 19/53

(54) **TRUSTED PNT SOLUTION BY CRPA ASSISTED GNSS SPOOFING PROTECTION**

(30) Priority: 22.03.2024 DE 102024001934
(71) Applicant: Rockwell Collins Deutschland GmbH, 69123 Heidelberg (DE)
(72) Inventor: EHINGER, Markus, Weinheim (DE)
(74) Representative: Dehns

(57) **Abstract**

A method of detecting a spoofing attack on a GNSS receiver provided on a vehicle is described herein. The method comprises: providing an antenna (12) having a controllable reception pattern, said GNSS receiver (16), a plurality of satellites (14) and a control unit (13), generating, via said control unit (13) a first antenna reception pattern of said antenna (12), performing a first scan of said plurality of said satellites (14) and receiving, via said GNSS receiver (16) a first set of said GNSS signals and a first set of signal-to-noise ratios from each of said plurality of satellites (14), and generating, via said control unit, a second reception pattern of said antenna (12), perform a second scan of said plurality of satellites (14) and receiving a second set of said GNSS signals and a second set of signal-to-noise ratios from said plurality of satellites (14), and comparing, via said control unit, said first set of signal-to-noise ratios with said second set of signal-to-noise ratios and detecting a difference between said first and second set of signal-to-noise ratios, and based on said detection of said difference in signal-to-noise ratios, determining, via said control unit (13), whether or not said difference indicates said spoofing attack on said GNNS receiver has occurred.

## Description

### FIELD

The examples disclosed herein relate to methods for protection from GNSS spoofing using Controlled Reception Pattern Antennas (CPRA).

### BACKGROUND

A controlled reception pattern antenna (CPRA) is designed for anti-jam GPS/GNSS performance when operated with compatible antenna electronics.

Controlled reception pattern antennas are adaptive beam steering antennas whose internal control unit adjusts the reception pattern to create nulls in the direction of interfering signals, such as radio frequency (RF) signals. They create a filter that can eliminate signals from a particular direction, while still letting through signals from other directions.

Advanced CRPA antenna systems allow a more direct control enabling a beam steering into a certain direction relative to their local coordinate system, supressing RF signals from all other directions to a certain degree, which impacts a signal-to-noise ratio of received RF signal.

Signals received from Global Navigation Satellite Systems (GNSS) are usually very weak and are thus susceptible to deliberate or unintentional interference. It is very easy for an adversary to intentionally introduce RF interference into the GPS frequency bands, referred to as jamming, and deny the user position, navigation, and timing (PNT) data. Using controlled reception pattern antenna antennas can help protect against changing of the antenna reception patterns to null out the jamming signals and direct the beams towards the satellites.

Spoofing of GNSS signals is the broadcast of false signals with the intention that the victim receiver will misinterpret them as authentic signals. This may result in a false position fix, a false clock offset or both.

CRPAs are used to suppress jammers, but the steering capability is not extensively used to protect against spoofing. One of the easiest forms of spoofing is what is known as a replay attack, i.e. wherein the signal of the GNSS satellites is received by the attacker and replayed a few milliseconds later. In several cases, replay attacks still work on vessels and vehicles equipped with CRPA antennas. In a jamming situation, or if spoofed by a replay attack, it is not possible to regain radio connection. Hence, the vessels and vehicles are vulnerable to communication disruptions. Due to the small energy needed if the spoofing device (having a dimension of a few cm) is attached to a vehicle, such a small device can still function for a long time span. This type of spoofing is difficult to detect, since the position information is almost correct and only the time derived is slightly wrong by a few milliseconds. This delay is, however, often sufficient to disturb radio connections secured by frequency hopping, but too small to be detected by humans or a real time clock. A new system or method is therefore needed that would ensure spoofing is detected and trusted correct position, navigation and time (PNT). Therefore, the object of the examples described herein is to provide a system capable of detecting spoofing and a method for detecting a vehicle location with trusted accuracy in position, velocity and time (PVT).

### SUMMARY

A method of detecting a spoofing attack on a GNSS receiver provided on a vehicle, which is described herein comprising: providing an antenna having a controllable reception pattern, said GNSS receiver, a plurality of satellites and a control unit, generating, via said control unit, a first antenna reception pattern of said antenna, performing a first scan of said plurality of said satellites and receiving, via said GNSS receiver a first set of said GNSS signals and a first set of signal-to-noise ratios from each of said plurality of satellites, and generating, via said control unit, a second reception pattern of said antenna, perform a second scan of said plurality of satellites and receiving a second set of said GNSS signals and a second set of signal-to-noise ratios from said plurality of satellites, and comparing, via said control unit, said first set of signal-to-noise ratios with said second set of signal-to-noise ratios and detecting a difference between said first and second set of signal-to-noise ratios, and based on said detection of said difference in signal-to-noise ratios, determining, via said control unit, whether or not said difference indicates said spoofing attack on said GNNS receiver has occurred.

In some examples described herein, the step of detecting whether or not said spoofing attack has occurred may comprise: determining if at least one of said second set of signal-to-noise ratios is below a predetermined threshold.

In some examples described herein, the step of detecting whether or not said spoofing attack has occurred may comprise: detecting a change in an amount of, or verifying an existence of, RF power being transmitted from at least one of said plurality of satellites.

In some examples described herein, the method may further comprise: confirming that said spoofing attack has occurred based on said change in RF power, or when no RF power has been detected from said at least one of said satellites.

In some examples described herein, the antenna system comprises two or more GNSS antennas separated by dedicated shielding and attached to several GNSS receivers with line of sight capability. Optionally, the antenna system comprises an additional mechanism to change the reception pattern. In this case the signal to noise ratios of the satellites in view are compared between the different receivers and, optionally, in several consecutive scans with changed reception pattern by the mechanism. Deriving time based on a known position and the individual line of sight timing together with the satellite position information. If the derived times with good quality differ too much, spoofing is detected and the time may be corrected to the most advanced time value received.

In some examples described herein, the method may further comprise: providing an Inertial Measurement Unit (IMU), calculating, via said control unit, an attitude of said vehicle based on data from said received first set of GNSS signals and data from said IMU, said method further comprising: identifying a first, chosen satellite from said plurality of satellites of said second scan, using said calculated vehicle attitude to calculate a pointing vector to said first, chosen satellite and commanding a steering direction of said antenna to said chosen satellite, directing said antenna to point to said chosen satellite, and based on said first set of GNSS signals received from said first scan, deriving a first local time of said chosen satellite, and, based on said second set of GNSS signals received from said second scan, deriving a second local time of said chosen satellite and comparing said first and second times.

In some examples described herein, the method may further comprise: via said control unit, determining that said spoofing attack has occurred, if said first time does not match said second time.

In some examples described herein, if spoofing is detected, said method may repeat using a second, different chosen satellite.

In some examples described herein, the method may further comprise: receiving almanac and/or ephemerides data from said satellite, and/or receiving odometer data and/or steering data from said vehicle, and wherein said step of calculating said vehicle attitude further comprises calculating said vehicle attitude based on said data from said received GNSS signals, from said IMU in combination with one or more of said almanac, ephemerides, odometer or steering data.

A system for detecting a spoofing attack on a GNSS receiver provided on a vehicle is also described herein, said system comprising: an antenna, said GNSS receiver, a plurality of satellites and a control unit, wherein said control unit is configured to generate a first antenna reception pattern of said antenna, said control unit further being configured to perform a first scan of said plurality of said satellites and wherein said GNSS receiver is configured to receive a first set of said GNSS signals and a first set of signal-to-noise ratios from each of said plurality of satellites, and wherein said control unit is configured to generate a second reception pattern of said antenna, said control unit being configured to perform a second scan of said plurality of satellites and said GNSS receiver being configured to receive a second set of said GNSS signals and a second set of signal-to-noise ratios from said plurality of satellites, and said control unit being configured to compare said first set of signal-to-noise ratios with said second set of signal-to-noise ratios and detect a difference between said first and second set of signal-to-noise ratios, and said control unit being configured, based on said detection of said difference in signal-to-noise ratios, to determine, via said control unit, whether or not said difference indicates said spoofing attack on said GNNS receiver has occurred.

In some examples described herein, the control unit may be configured to detect whether or not said spoofing attack has occurred by determining if at least one of said second set of signal-to-noise ratios is below a predetermined threshold.

In some examples described herein, the control unit may be configured to detect whether or not said spoofing attack has occurred by detecting a change in an amount of, or verifying an existence of, RF power being transmitted from at least one of said plurality of satellites.

In some examples described herein, the control unit may be configured to confirm that said spoofing attack has occurred based on said change in RF power, or when no RF power has been detected from said at least one of said satellites.

The system may further comprise an Inertial Measurement Unit (IMU), said control unit being configured to calculate an attitude of said vehicle based on data from said received first set of GNSS signals and data from said IMU, said control unit being configured to identify a first, chosen satellite from said plurality of satellites of said second scan, said control unit further being configured to use said calculated vehicle attitude to calculate a pointing vector to said first, chosen satellite and command a steering direction of said antenna to said chosen satellite, and to direct said antenna to point to said chosen satellite, and said control unit being further configured to, based on said first set of GNSS signals received from said first scan, derive a first local time of said chosen satellite, and, based on said second set of GNSS signals received from said second scan, derive a second local time of said chosen satellite and compare said first and second times.

In some examples described herein, the control unit may be configured to determine that said spoofing attack has occurred, if said first time does not match said second time.

In some examples described herein, the control unit may be configured to receive almanac and/or ephemerides data from said plurality of satellites, and/or receive odometer data and/or steering data from said vehicle, to calculate said vehicle attitude based on said data from said received GNSS signal, from said IMU in combination with one or more of said almanac, ephemerides, odometer or steering data.

In some examples, the vehicle may be on the ground or at sea or in air.

In some examples, the processing unit is configured to continuously or intermittently monitor a signal-to-noise ratio of the GNSS signal.

In some examples, the processing unit is configured to derive precision time and support, based on the determined location. The system advantageously synchronizes internal reference time.

In some examples, the CRPA further comprises a power supply, a radio frequency signal receiver, and a control unit.

In some examples, the processing unit is configured to enter a rough position and use stored ephemerides to re-establish a trusted time and position.

In some examples, the system further comprises a beamformer device configured to steer the antenna of the CRPA.

In some examples, the CRPA is mounted on a vehicle.

### BRIEF DESCRIPTION OF THE DRAWINGS

Figure 1 shows a system for detecting spoofing of a signal indicating a vehicle location.
Figure 2 shows the components of a CRPA.
Figure 3 depicts the flow of data between the CPRA antenna(s) and the GNSS receiver and the output of position velocity time (PVT) data.

### DETAILED DESCRIPTION

Controlled reception pattern antennas (CRPAs) are used to suppress jammers, by adjusting the antenna's reception pattern to create nulls in the direction of interfering signals, such as radio frequency (RF) signals. These antennas work by creating a reception pattern that maximizes the GNSS signal-to-noise ratio, using beam-steering to prioritize signals from the direction of the satellites and creating "nulls" in the direction of the interference. In this way, they thereby create a filter that can eliminate signals from a particular direction, while still letting through signals from other directions.

Replay attacks still work on vessels and vehicles equipped with CRPAs, however. In a jamming situation, or if spoofed by a replay attack, it is then not possible to regain radio connection. With the new system and method described herein, it is possible to re-establish a trusted position and time, where previously this was not possible. The methods and systems described herein therefore aim to protect against such attacks, such that the correct position and time of a vehicle can be assured.

Although the new systems and methods are described herein using a CRPA, the new systems and methods described herein can also be realized using different hardware combinations. For example, standard GNSS antennas may be used in combination with a GNSS receiver. In its simplest form, the system may therefore replace a CRPA antenna with standard GNSS antennas that are provided in a metal structure which is shaped and configured to allow for the reception pattern of each individual antenna to be generated. This provides a very low-cost and simplified system and method for detecting a spoofing attack.

In summary, in the examples described herein, and as described below, a control unit of the system is configured to generate a first antenna reception pattern for each antenna being used, perform a scan of a plurality of satellites and evaluate them according to their signal-to-noise ratio. The ratio may be dependent and therefore indicative of the physical signal strength, signal sender direction and the antenna reception pattern. After this first scan, the GNSS receiver then receives a first set of said GNSS signals and a first set of signal-to-noise ratios from each of these scanned plurality of satellites. The control unit then generates a second reception pattern for each of the antennas, which is different to the first reception pattern and a second scan of the plurality of satellites is performed. A second set of these new GNSS signals and a second set of signal-to-noise ratios are then received from the plurality of satellites. By comparing the first set of signal-to-noise ratios with the second set of signal-to-noise ratios, the difference between the first and second set of signal-to-noise ratios can be detected. Based on this detected difference in signal-to-noise ratios, the control unit is then able to determine whether or not this difference indicates that a spoofing attack on the GNNS receiver has occurred.

In some of the examples, the methods and systems described herein may also use the communicated GNSS position of the satellites in the sky to pinpoint one single chosen satellite that is deemed to be in a favorable position. Millisecond time spoofing doesn't alter this position strongly enough for it to be detectable.

The favorable satellite may be chosen from a plurality of satellites and data such as the local time and/or position of the chosen satellite may be initially detected. At regular intervals afterwards, the position and time of the chosen, favorable, satellite may then be verified by monitoring changes in the reception pattern received by the CRPA from the satellite. Spoofing may then be detected by detecting a change in the reception pattern from that satellite, indicated by the change in the signal-to-noise parameter of the signal.

To be aware of spoofing using this method, it is sufficient to validate only the one single chosen satellite and calculate the local time based on the estimated position. If this evaluated time is not the same as the time that was derived earlier, then milli second spoofing is confirmed. Other types of spoofing based on replay attacks may also be revealed via this method, as discussed below.

In other examples, a change in signal quality may also be verified by determining that no RF signal is being received from that satellite, thereby confirming that the chosen satellite is not there and that the signal has been spoofed.

This is a faster way than scanning the complete sky for satellites and also validates the existence of this chosen, dedicated satellite. The local time can be evaluated by using the known position estimate and the line of sight data of this chosen, validated satellite.

The new method may be performed and achieved using the systems as shown in the figures. As mentioned above, the use of array antennas (such as CRPA) can help to mitigate the impacts of jamming and spoofing attacks. The attitude of the vehicle may be provided by an IMU. Additionally, the vehicle may have additional sensors, e.g. a compass, magnetometer, or the like, to determine the attitude of the vehicle. Using these components in the way described herein, it is possible to use the new system and method to determine the correct vehicle attitude and detect spoofing of the signal. That is, based on the pointing capability of a CRPA, a specific satellite can be targeted and its signals attenuated. The known position of the vehicle can be used to derive an accurate time and support for the position estimation.

The new system and method described herein are robust against replay attacks, since a physical satellite position is used as a reference for the correct time and correctness of the signal. The use of different individual satellites in sequence further improves the reliability.

The new methods and devices described herein have also found that by entering a rough position and using stored ephemerides, it is possible to re-establish a trusted time and position even in a jammed or spoofed situation.

The new system and method will now be described in more detail with reference to the figures.

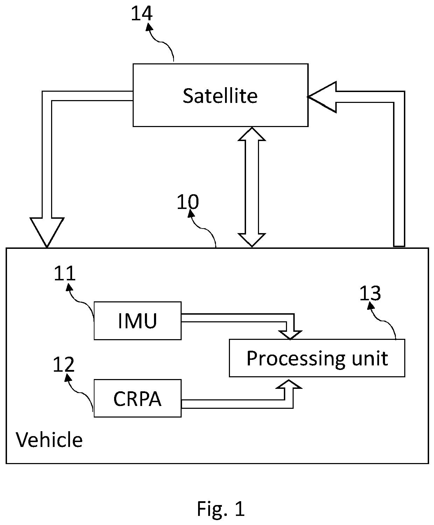

Figure 1 illustrates a vehicle 10 which may be on the ground, at sea or in the air. That is, the vehicle can be a ground vehicle, a ship or an aircraft. The vehicle 10 is equipped with an antenna, or an array of antennas. These are indicated in the figures as being a CRPA, however, as described earlier, standard antennas may alternatively be used. The antennas 12 are connected to a processing unit 13, and an IMU 11. The IMU 11 provides the processing unit 13 with information about the orientation and movement of the vehicle and so is configured to determine the attitude of the vehicle. The determination of a vehicle attitude by an IMU 11 may comprise the IMU 11 being mounted on the vehicle 10 and it may measure orientation, acceleration, and motion. The IMU 11 provides critical data about the vehicle's position and orientation.

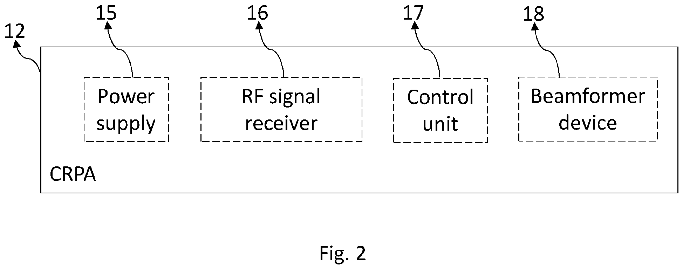

Figure 2 shows the individual components of the array of antennas, which in this figure is a CRPA 12. The CRPA 12 may comprise a power supply 15, an RF signal receiver 16 (which is configured to receive GNSS signals as well as RF interference signals), a control unit 17 and/or a beamformer device 18.

The beamformer device 18 may be configured to steer a signal from the antennas, as discussed above, in order to nullify interference signals. This device allows precise steering of the signal from the antennas to a preferred satellite 14, which enables the systems to have improved signal quality, attenuation of unwanted signals and enhanced security.

Using an array of antennas, or a CRPA 12, to steer the signal to a chosen satellite 14 allows it to precisely target a specific satellite from the many available satellites in a GNSS constellation. The satellite 14 is responsible for transmitting signals that can be used for navigation and positioning.

Figure 2 depicts the components of a CRPA 12 in more detail. The CRPA 12 is a special antenna system designed for both reception and steering. The CRPA 12 can steer the reception pattern towards a specific, chosen, satellite 14. By focusing the reception pattern of the CRPA 12 on the desired satellite and away from interfering sources, the system described herein effectively attenuates signals from unwanted sources, as described below. In the methods described herein, the CRPA 12 can be aimed at a specific satellite 14 for signal reception and protection against jamming or spoofing.

The processing unit 13 is responsible for processing the signals received by the CRPA 12. The processing unit 13 is further configured to perform signal attenuation and calculation of pointing vectors such as RF power of the antennas or CRPA, which are used to precisely point to the specific satellite 14. According to the systems described herein, communicating GNSS satellites, such as GPS may be used. In the examples wherein a local time is compared, the antennas or CPRA 12 may communicate with a specific, chosen, satellite 14 to determine its precise location and timing.

The CRPA 12 may use multiple antennas and the processing unit 13 may be connected to the CPRA 12, such that the processing unit 13 is configured to control the reception pattern of the antenna. The CRPA 12 has the capability to steer the optimal reception conditions towards a favourable direction. The processing unit 13 is configured to control the reception pattern of the antenna 13. This means that, in the case of GPS jamming, the CPRA 12 is able to identify the interference (e.g. radio frequency interference) and control the reception pattern by steering the beam or signal towards the satellite 14 and nullifying the signal that is created by interference.

In use, the system utilizes the steering capabilities of the antennas or CRPA 12 to target a specific satellite 14. The signal from the satellite 14 is then attenuated and used as a reference.

The method aims to re-establish a trusted position and time for the vehicle 10. It does this by leveraging the IMU 11 to determine the vehicle's attitude, allowing it to be accurately pointed at a particular satellite 14.

The initial location of a vehicle 10 can be detected in the following way.

A GNSS receiver 16 is started in line of sight mode and the CRPA antenna(s) 12 is placed in the nulling operation mode. The GNSS receiver 16 initially receives a plurality of GNSS signals from a plurality of satellites, 14. Additional data such as almanac and ephemerides data for those satellites may also be received by the receiver 16 and stored in a memory of the processing unit 13, or via other means.

The vehicle attitude is then estimated, e.g. using the data from the IMU 11 and this is correlated with the GNSS data, using, optionally, also the other available sensor data, which may comprise, for example, an odometer, steering angle, the data from the IMU etc.

Ephemerides data can be used to determine the position of a satellite in the sky. Since satellites that are closer to the ground are more severely affected by spoof attacks. The methods and systems described herein can therefore use this ephemerides data to determine which satellites are more likely to be affected by spoofing attacks and which are more reliable. The more reliable satellites may therefore be the one(s) chosen for use in the methods described herein.

The methods described herein can check for spoofing at regular time intervals.

The new spoofing detection method comprises the following steps: providing a system comprising an antenna or plurality of antennas, or a CRPA 12, a GNSS receiver 16, a plurality of satellites 14 and a control unit 13. The method further comprises generating, via the control unit 13 a first antenna reception pattern of the antenna 12, performing a first scan of the plurality of the satellites (14) and receiving, via the GNSS receiver 16 a first set of the GNSS signals and a first set of signal-to-noise ratios from each of the plurality of satellites. The method further comprises generating, via the control unit, a second reception pattern of the antenna 12, performing a second scan of the plurality of satellites 14 and receiving a second set of the GNSS signals and a second set of signal-to-noise ratios from the plurality of satellites 14, and comparing, via the control unit, the first set of signal-to-noise ratios with the second set of signal-to-noise ratios and detecting a difference between the first and second set of signal-to-noise ratios, and based on the detection of the difference in signal-to-noise ratios, determining, via the control unit 13, whether or not the difference indicates the spoofing attack on the GNNS receiver has occurred.

In other words, spoofing can be confirmed by comparing the earlier measurements/data produced via the first scan of the satellites with the measurements/data produced via the second scan of the satellites.

In some examples, after scanning the plurality of satellites, one single satellite 14 is chosen that is considered to be in a preferred and chosen reception range. This can be performed by measuring and collecting the signal-to-noise ratios of the plurality of tracked satellites 14 and evaluating this signal-to-noise ration against the physical attenuation performance of the CRPA antenna 12. By this procedure, a specific satellite 14 can be identified and chosen for use, that has the most reliable physical behaviour, whilst those with the least reliable behaviour may not be used.

The pointing direction relative to the CRPA antenna orientation may then be calculated based on the GNSS satellite almanac and ephemerides data and vehicle orientation. This can be achieved by the processing unit 13 being configured to provide a command to the CPRA control unit to reset the GNSS receiver 16 and command the CRPA antenna 12 to point the antenna reception pattern to the chosen, and most reliable antenna signal that has been derived from the previous step.

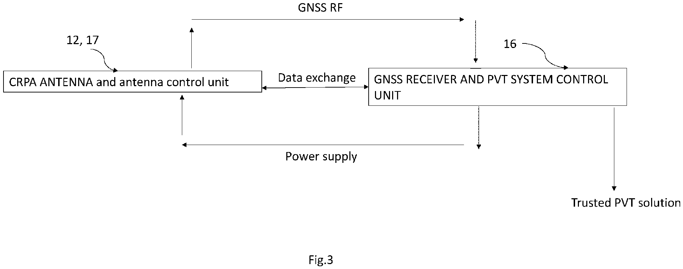

Spoofing can be detected by verifying the existence of the selected satellite by verifying the existence of RF power transmitted from the chosen satellite. If it is verified that no RF power is being transmitted from that chosen satellite, then it is confirmed that an error pattern has occurred and spoofing is confirmed. This is depicted in figure 3.

For example, line of sight data may be collected from the chosen satellite 14 and if it is detected that the reception pattern of the line of sight data has changed, then it is also confirmed that an error pattern has occurred and spoofing is confirmed.

The processing unit 13 of the system may be configured to monitor the signal-to-noise ratio of the GNSS signal continuously or intermittently. If the signal-to-noise ratio changes in a manner that is consistent with corresponding changes to the physical reception conditions given by the reception pattern, the signal may be considered to be reliable.

Spoofing may also be detected by monitoring the predefined signal-to-noise ratio and comparing it to a threshold that may be established based on the expected GNSS signal conditions. The threshold may represent the minimum acceptable signal-to-noise ratio value for a legitimate signal and so signals with a signal-to-noise ratio below this threshold may be considered suspect. The measured signal-to-noise ratio value may be compared with the predefined threshold. If the signal-to-noise ratio falls below the threshold, this indicates that the received signal is weaker or noisier than expected. This indicates possible interference or spoofing. The signal-to-noise ratio threshold can be dynamically adjusted based on real-time signal conditions. For example, if the system encounters jamming or spoofing, it can temporarily raise the threshold to be more stringent in its assessment. By monitoring the signal-to-noise ratio of the received signal and comparing it to a predetermined threshold, the system can detect abnormal signal conditions that indicate spoofing or interference.

Spoofing may also be confirmed by deriving the time of the chosen satellite 14 based on the GNSS data of the earlier scan. That is, the processing unit 13 may be configured to load the new satellite constellation and vehicle position data into the GNSS receiver 16. This may then be used to derive the precise time. This time can then be used to acquire the P/Y or M-code signals of the GNSS constellation. If the new time derived does not match the earlier derived time then then spoofing is also confirmed. The processing unit may also be configured to derive precision time and support, based on a determined location. The location comprises one or more of altitude and position. The processing unit is configured to entering a rough position and use stored ephemerides to re-establish a trusted time and position. When the system faces challenges such as signal loss, jamming, or spoofing, such that reliable positioning information is temporarily unavailable, this approach allows the system to maintain a trusted time and position.

If spoofing is confirmed, the CRPA antenna 12 may be configured to be commanded to point an antenna node into the direction of the least physical satellite, which is the assumed direction of the spoofing. The processing unit 13 will therefore disregard that direction in future evaluations.

If spoofing is detected then the GNSS receiver is restarted and the precision time from the verified satellite is derived. In this way, the new operational method shall verify the established positional fix and detect a spoofing by a replay attack.

Due to the different comparisons made by the system and method described herein, the processing unit 13 is able to distinguish between a genuine signal and a signal that has been affected by a spoofing attack.

In the case of a spoofing detection, the processing unit can start another operational mode, which is configured to then re-establish a trusted position. The system may also include means to trigger an alarm or take specific action. This may include initiating countermeasures, raising an alarm or no longer relying on that particular signal source for positioning or navigation.

As described above, the processing unit of the CRPA 12 may be configured to receive a plurality of signals from a plurality of satellites and may further be configured to process the plurality of signals in sequence. The plurality of satellites and the sequential processing of the signals increase the reliability, accuracy and resilience of the system in challenging signal environments, providing numerous benefits to users and applications requiring accurate position and timing information.

The system optionally comprises means of geolocating a spoofing device, jammer or spurious emitter. This enables to identify and mitigate potential threats to the system signal and enhances the overall security of the system and its data.

As soon as the GNSS receiver has regained a position fix, a new spoofing detection operation may be started to verify whether or not the GNSS receiver is still being spoofed.

If no spoofing is detected then it is confirmed that the data is correct. The PVT solution provided can therefore be trusted.

The special operation mode described here is may therefore be described as being based on a combination of stored GNSS orbital parameters and an established satellite tracking. The system and method described herein may be repeated multiple times using a different, chosen satellite 14 each time. For example, the GNSS receiver 16 may store data relating to the satellites 14 that have already been used and the newly selected satellites may be focussed one after another by the CRPA antenna, under the control of the processing unit 13.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A method of detecting a spoofing attack on a GNSS receiver provided on a vehicle, said method comprising:
providing an antenna (12) having a controllable reception pattern, said GNSS receiver (16), a plurality of satellites (14) and a control unit (13),
generating, via said control unit (13) a first antenna reception pattern of said antenna (12),
performing a first scan of said plurality of said satellites (14) and
receiving, via said GNSS receiver (16) a first set of said GNSS signals and a first set of signal-to-noise ratios from each of said plurality of satellites (14), and
generating, via said control unit, a second reception pattern of said antenna (12),
perform a second scan of said plurality of satellites (14) and
receiving a second set of said GNSS signals and a second set of signal-to-noise ratios from said plurality of satellites (14), and
comparing, via said control unit, said first set of signal-to-noise ratios with said second set of signal-to-noise ratios and detecting a difference between said first and second set of signal-to-noise ratios, and
based on said detection of said difference in signal-to-noise ratios, determining, via said control unit (13), whether or not said difference indicates said spoofing attack on said GNNS receiver has occurred.

2. The method of claim 1, wherein said step of detecting whether or not said spoofing attack has occurred comprises: determining if at least one of said second set of signal-to-noise ratios is below a predetermined threshold.

3. The method of claim 1, wherein said step of detecting whether or not said spoofing attack has occurred comprises: detecting a change in an amount of, or verifying an existence of, RF power being transmitted from at least one of said plurality of satellites (14).

4. The method of claim 3, further comprising: confirming that said spoofing attack has occurred based on said change in RF power, or when no RF power has been detected from said at least one of said satellites (14).

5. The method of claim 1 further comprising
providing an Inertial Measurement Unit "IMU" (11),
calculating, via said control unit (13), an attitude of said vehicle based on data from said received first set of GNSS signals and data from said IMU (11),
said method further comprising:
identifying a first, chosen satellite (14) from said plurality of satellites of said second scan,
using said calculated vehicle attitude to calculate a pointing vector to said first, chosen satellite (14) and commanding a steering direction of said antenna (12) to said chosen satellite,
directing said antenna (12) to point to said chosen satellite (14), and
based on said first set of GNSS signals received from said first scan, deriving a first local time of said chosen satellite (14), and,
based on said second set of GNSS signals received from said second scan, deriving a second local time of said chosen satellite (14)
and comparing said first and second times.

6. The method of claim 5, further comprising, via said control unit, determining that said spoofing attack has occurred, if said first time does not match said second time.

7. The method of claim 5 or 6, wherein, if spoofing is detected, said method of claim 6 repeats using a second, different chosen satellite (14).

8. The method of any of claims 5 to 7, further comprising
receiving almanac and/or ephemerides data from said satellite,
and/or receiving odometer data and/or steering data from said vehicle,
and wherein said step of calculating said vehicle attitude further comprises calculating said vehicle attitude based on said data from said received GNSS signals, from said IMU in combination with one or more of said almanac, ephemerides, odometer or steering data.

9. A system for detecting a spoofing attack on a GNSS receiver provided on a vehicle, said system comprising:
an antenna (12), said GNSS receiver (16), a plurality of satellites (14) and a control unit (13),
wherein said control unit (13) is configured to generate a first antenna reception pattern of said antenna (12),
said control unit further being configured to perform a first scan of said plurality of said satellites (14) and
wherein said GNSS receiver (16) is configured to receive a first set of said GNSS signals and a first set of signal-to-noise ratios from each of said plurality of satellites (14), and
wherein said control unit is configured to generate a second reception pattern of said antenna (12),
said control unit (13) being configured to perform a second scan of said plurality of satellites (14) and
said GNSS receiver (16) being configured to receive a second set of said GNSS signals and a second set of signal-to-noise ratios from said plurality of satellites (14), and
said control unit (13) being configured to compare said first set of signal-to-noise ratios with said second set of signal-to-noise ratios and detect a difference between said first and second set of signal-to-noise ratios, and
said control unit (13) being configured, based on said detection of said difference in signal-to-noise ratios, to determine, via said control unit (13),
whether or not said difference indicates said spoofing attack on said GNNS receiver has occurred.

10. The system of claim 9, said control unit being configured to detect whether or not said spoofing attack has occurred by determining if at least one of said second set of signal-to-noise ratios is below a predetermined threshold.

11. The system of claim 9, said control unit being configured to detect whether or not said spoofing attack has occurred by detecting a change in an amount of, or verifying an existence of, RF power being transmitted from at least one of said plurality of satellites (14).

12. The system of claim 11, said control unit being configured to confirm that said spoofing attack has occurred based on said change in RF power, or when no RF power has been detected from said at least one of said satellites (14).

13. The system of claim 9, further comprising
an Inertial Measurement Unit "IMU" (11),
said control unit (13) being configured to calculate an attitude of said vehicle based on data from said received first set of GNSS signals and data from said IMU (11),
said control unit being configured to identify a first, chosen satellite (14) from said plurality of satellites of said second scan,
said control unit (13) further being configured to use said calculated vehicle attitude to calculate a pointing vector to said first, chosen satellite (14) and command a steering direction of said antenna (12) to said chosen satellite, and to direct said antenna (12) to point to said chosen satellite (14), and
said control unit being further configured to, based on said first set of GNSS signals received from said first scan, derive a first local time of said chosen satellite (14), and,
based on said second set of GNSS signals received from said second scan, derive a second local time of said chosen satellite (14) and compare said first and second times.

14. The system of claim 13, wherein said control unit is further configured to determine that said spoofing attack has occurred, if said first time does not match said second time.

15. The system of any of claims 9 to 14, wherein said control unit (13) is further configured to receive almanac and/or ephemerides data from said plurality of satellites, and/or receive odometer data and/or steering data from said vehicle, to calculate said vehicle attitude based on said data from said received GNSS signal, from said IMU in combination with one or more of said almanac, ephemerides, odometer or steering data.
